# FASCICULE DE BREVET EUROPEEN

(11) **EP 3 855 546 B1**
(45) Date de publication et mention de la délivrance du brevet: **19.10.2022**
(21) Numéro de dépôt: 21152874.0
(22) Date de dépôt: 22.01.2021
(51) Int. Cl.: H01M 8/1037, H01M 8/1053, H01M 8/1081

(54) **MEMBRANE D'ÉCHANGE PROTONIQUE HYBRIDE**
HYBRIDE PROTONENAUSTAUSCHMEMBRAN
HYBRID PROTON EXCHANGE MEMBRANE

(30) Priorité: 23.01.2020 FR 2000656
(43) Date de publication de la demande: 28.07.2021
(73) Titulaire: SYMBIO FRANCE, 69200 Vénissieux (FR); College de France, 75005 Paris (FR); Sorbonne Université, 75006 Paris (FR); Centre national de la recherche scientifique, 75016 Paris (FR)
(72) Inventeur: VACQUIER, Christophe, 69003 LYON (FR); ROVIRA, Nathalia, 25200 MONTBELIARD (FR); BAVEREL, Christophe, 25400 AUDINCOURT (FR); LABERTY-ROBERT, Christel, 75005 PARIS (FR); COUSTAN, Laura, 33000 BORDEAUX (FR); SANCHEZ, Clément, 91440 BURES SUR YVETTE (FR)
(74) Mandataire: Lavoix

(56) Documents cités:
- FR-A1- 2 888 048
- JP-A- 2007 172 871
- US-A1- 2007 213 494
- REN S ET AL: "Organic silica/Nafion^(R) composite membrane for direct methanol fuel cells", JOURNAL OF MEMBRANE SCIENCE, ELSEVIER BV, NL, vol. 282, no. 1-2, 5 octobre 2006 (2006-10-05), pages 450-455, XP024931839, ISSN: 0376-7388, DOI: 10.1016/J.MEMSCI.2006.05.050 [extrait le 2006-10-05]

## Description

La présente invention concerne le domaine des piles à combustible et notamment celui des membranes échangeuses de protons utilisées dans ces piles.

Les membranes échangeuses de protons ou membrane à électrolyte polymère (PEM) sont des membranes semi-perméables permettant la conduction protonique tout en étant imperméable aux gaz tels que le dioxygène ou le dihydrogène: les protons passent à travers la membrane, alors que les gaz sont stoppés. Les PEM sont généralement fabriquées à partir de membranes en polymère pur ou de membranes composites à base de polymère.

Des membranes de pile à combustible à base d'un copolymère sulfoné de tétrafluoroéthylène et d'un perfluoro(alkylvinyléther) sont également connues. Ainsi, un des matériaux les plus communément utilisés par les constructeurs de membrane échangeuse de protons est le Nafion, un copolymère fluoré sulfoné produit par la société DuPont.

CA2950775 décrit des réseaux de fibres électrofilées pour renforcer les membranes de pile à combustible.

US 2007/0213494 décrit un polymère organo-minéral (hybride) à base de silice et son utilisation à titre de matériau échangeur de protons.

Néanmoins, le fonctionnement de piles à combustible entraine une dégradation de la membrane, en raison des hautes ou très basses températures et de l'humidité relative élevée (proche de 90%), et de la formation de peroxyde d'hydrogène (H₂O₂) qui dégrade les matériaux.

Il est donc nécessaire de mettre à disposition des membranes améliorées, plus résistantes à ces contraintes de fonctionnement, et présentant une plus longue durée de vie.

Ainsi, l'invention propose une membrane à base de matériau hybride, à base de composants organiques et inorganiques, ladite membrane étant capable notamment de réagir avec le peroxyde d'hydrogène afin de conserver de bonnes propriétés mécaniques et conductrices.

Selon un premier objet, la présente invention concerne une membrane à échange de protons pour pile à combustible, ladite membrane comprenant une face anodique coté anode et une face cathodique coté cathode, ladite membrane comprenant deux couches :
Une couche cathodique, conductrice et auto-régénérante, assurant la face cathodique, et comprenant au moins un polymère (iii) porteur de fonctions SO₃H; et
Une couche anodique, conductrice, assurant la face anodique et comprenant au moins un polymère (iii') porteur de fonctions SO₃H;
Lesdits polymères (iii) et (iii') pouvant être identiques ou différents ;
Ladite membrane étant caractérisée en ce que ladite couche cathodique contient au moins un polymère (i) portant des fonctions thiol (-SH).

Selon l'invention, les membranes contiennent des fonctions SH cathodiques, c'est-à-dire présentes au sein de la couche cathodique de la membrane.

Ces fonctions SH peuvent également être présentes au sein de la couche catalytique cathodique de la pile à combustible.

Ainsi, une pile comprenant une membrane selon l'invention comprend avantageusement une zone fonctionnalisée par les fonctions SH s'étendant de la couche cathodique de la membrane à la couche catalytique cathodique présente à sa surface.

Selon un mode de réalisation, les fonctions -SH peuvent être réparties de façon homogène au sein de la couche cathodique, et éventuellement au sein de la couche catalytique cathodique.

Alternativement, elles peuvent être réparties selon un gradient de concentration des fonctions -SH augmentant vers la surface cathodique. Ce gradient illustre la concentration croissante des fonctions SH depuis la face interne de la couche cathodique avec ladite couche anodique vers sa face externe assurant l'interface la une couche catalytique cathodique.

On entend par face interne de la membrane, l'interface entre la couche cathodique et la couche anodique.

On entend par faces externes de la membrane, ses faces cathodiques et anodiques, assurant les interfaces avec la couche catalytique cathodique et la couche catalytique anodique, respectivement.

Les membranes à échange de proton selon l'invention sont auto-régénérantes en ce qu'elles utilisent le peroxyde d'hydrogène nocif qui est produit pendant le fonctionnement de la pile et dégrade les membranes. Les fonctions SH présentes dans la couche cathodique (et éventuellement dans la couche catalytique cathodique) réagissent et consomment le peroxyde d'hydrogène et empêchent ainsi son accumulation, néfaste. De plus, cette réaction produit des fonctions SO₃H qui préservent, voire régénèrent et augmentent les propriétés conductrices.

Les membranes selon l'invention permettent ainsi d'augmenter considérablement les performances et la longévité des piles à combustible.

Selon un mode de réalisation, les couches sont par exemple formées de fibres hybrides obtenues par électrofilage

Selon un mode de réalisation, les membranes selon l'invention sont dites hybrides en ce qu'elles contiennent une composante organique et une composante inorganique (aussi appelé ici minérale).

Les constituants organiques assurent généralement les propriétés conductrices, tandis que les constituants inorganiques assurent le réseau.

Typiquement, le réseau est un réseau minéral silicaté, de type Nafion, ou des polyéthers sulfonés par exemple. Ainsi, selon un mode de réalisation, la couche cathodique et/ou ladite couche anodique comprend/comprennent, un polymère inorganique (ii) et/ou (ii'), respectivement ; lesdits polymères (ii) et (ii') pouvant être identiques ou différents. De préférence les polymères (ii) et (ii') sont des dérivés du silicium.

Les membranes selon l'invention combinent ainsi la capacité à mimer la séparation de phases structurelle observée avec les membranes Nafion^{®}, avec des nanocanaux ioniques orientés, dans lesquels les protons peuvent aisément diffuser.

De plus, la composition de la membrane présente un ratio hydrophillicité/hydrophobicité favorable qui améliore la diffusion des protons et les propriétés de mouillabilité de la membrane.

La morphologie et la composition de la membrane confère de bonnes propriétés mécaniques dans un large domaine de températures, pouvant s'échelonner entre les températures négatives et 120°C environ.

Selon un mode de réalisation, les membranes selon l'invention sont constituées d'un mélange de :
- polymères organiques choisis parmi les polymères porteurs (i) de fonctions SH et/ou (iii) et (iii') de fonctions SO₃H, et de
- polymères inorganiques (ii) et (ii') dérivés du silicium.

Les polymères dérivés du silicium forment un réseau poreux continu tridimensionnel aléatoire, au sein duquel sont insérés des constituants organiques.

Pour ce qui concerne la couche cathodique, les polymères organiques sont notamment constitués de polymères (i) porteurs de fonctions SH et de polymères (iii) porteurs de fonctions SO₃H.

Au sein de ladite couche cathodique, le rapport de la concentration en fonctions SO₃H, rapportée à la concentration en fonctions SH est généralement compris entre 0.5 et 4, de préférence entre 1 et 4.

Pour ce qui concerne la couche anodique, les polymères organiques sont notamment constitués de polymères (iii') porteurs de fonctions SO₃H.

Pour ce qui concerne la couche cathodique et la couche anodique, les polymères inorganiques sont notamment constitués de polymères (ii) et (ii'), respectivement, dérivés du silicium.

Selon un mode de réalisation:
- dans la couche cathodique, les polymères (ii), (iii) et (i) sont présents dans le rapport 1 :2 :1, et
- dans la couche anodique les polymères (ii') et (iii') sont dans le rapport 1 :2.

A titre de polymère (i) portant des fonctions thiol (-SH), on peut notamment citer le (3-mercaptopropyl)trimethoxysilane (MPTMS) de formule :

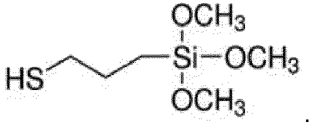

A titre de polymère (ii) et/ou (ii'), on peut citer les dérivés de silicium, tels que le tetraéthylorthosilicate (TEOS) ou tétraméthylorthosilicate (TMOS), de formule :

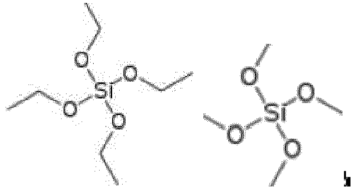

Le polymère inorganique (ii) et/ou (ii') peut également être un dérivé de type Nation, ou des polyéthers sulfonés

Le polymère inorganique assure le squelette de la membrane.

A titre de polymère porteur de fonctions SO₃H (iii) et/ou (iii'), on peut notamment citer le CSPTC (2-(4-Chlorosulfonylphenyl)ethyltrichlorosilane) de formule :

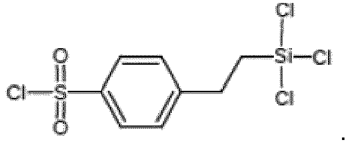

Selon un mode de réalisation alternatif au mélange des polymères discuté ci-dessus, les constituants organiques et inorganiques sont co-condensés : les polymères de silicium forment un réseau auquel sont greffés les polymères organiques.

Selon ce mode de réalisation, les polymères (i), (ii) et (iii) d'une part, et les polymères (ii') et (iii') d'autre part, sont co-polymérisés de façon à constituer des copolymères organo-minéraux, c'est-à-dire des copolymères comprenant à la fois une composante organique et une composante minérale.

Ainsi, les dérivés de silice peuvent être fonctionnalisés par des fonctions SH et/ou SO₃H, selon la couche cathodique ou anodique.

Les polymères (i), (ii), (ii'), (iii), (iii'), identiques ou différents, peuvent alors être choisis parmi les (co)polymères dérivés du silicium porteurs de fonctions SH et/ou de fonctions SO₃H, respectivement.

Dans l'un ou l'autre des modes de réalisation précités, les polymères en mélanges ou co-polymérisés comprennent à la fois une composant minérale (polymère (ii) ou (ii') dérivé de silicium) pour permettre la rigidité du réseau, et une composante organique (polymères (i), (iii) ou (iii')) dont les fonctions SH et/ou SO₃H fournissent les protons mobiles (éventuellement après hydrolyse des fonctions SH pour le cas des polymères (i)).

Typiquement, la couche anodique et la couche cathodique peuvent comprendre en outre un ou plusieurs (co)polymères non-conducteurs pour assurer les propriétés mécaniques de la membrane. Ces polymères sont connus et généralement utilisés à cette fin dans les membranes. On peut ainsi citer à titre de polymères non-conducteurs, le poly(fluorure de vinylidène) (PVDF), le poly(co-hexafluoropropylene) (HFP), leurs mélanges et/ou leurs copolymères Poly(vinylidene fluoride-co-hexafluoropropylene) (PVDF-HFP), répondant à la formule :

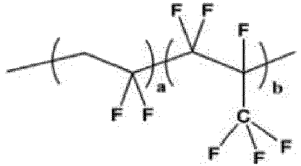

Les couches cathodiques et anodiques des membranes selon l'invention peuvent comprendre en outre un ou plusieurs additifs organiques ou inorganiques, identiques ou différents selon la couche.

Les additifs classiquement utilisés dans les membranes conductrices de protons peuvent également être envisagés ici. On peut notamment citer à titre d'additif le PEO (polyéthylène glycol) et le OFP (2,2,3,3,4,4,5,5-Octafluoro-1- pentanol (OFP)), de formule respective :

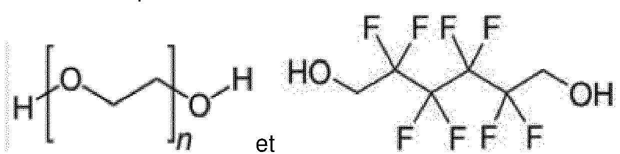

PEO améliore la conductivité et la mobilité des chaînes de PVDF-HFP tandis que OFP améliore l'affinité entre PVDF-HFP (grâce à sa chaîne carbonée portant des atomes de fluor) et les composants inorganiques (par la présence de fonctions hydroxyle).

L'épaisseur totale de la membrane selon l'invention est généralement comprise entre 5 et 150 µm, typiquement entre 15 et 40 µm.

Selon un mode de réalisation, la couche cathodique est plus fine que la couche anodique. Typiquement, ladite couche cathodique a une épaisseur comprise entre 5 et 10 µm.

Selon un mode de réalisation, la couche anodique et/ou la couche cathodique sont constituées de fibres polymériques des polymères en mélange ou copolymérisés précités.

Ces fibres sont entremêlées de façon aléatoire de sorte à créer un réseau tridimensionnel poreux.

Typiquement, ces fibres ont un diamètre moyen compris entre 100 nm et 10 µm. Ce diamètre peut être adapté en fonction du diamètre de la buse de l'appareillage d'électrofilage utilisé lors de leur fabrication notamment.

Selon un autre objet, la présente invention concerne également une pile à combustible comprenant une membrane bicouche selon l'invention.

Dans une telle pile, la membrane selon l'invention est revêtue d'une couche catalytique cathodique sur la face externe de la couche cathodique et d'une couche catalytique anodique sur la face externe de la couche anodique.

Selon un mode de réalisation, la couche catalytique cathodique comprend les polymères (i) et (iii), et la couche catalytique anodique comprend le polymère (iii'), lesdits polymères (i), (iii) et (iii') étant tels que définis ci-avant.

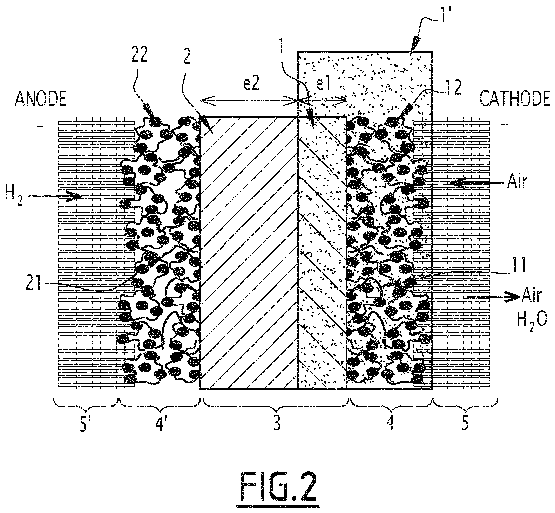

Une représentation schématique illustrative d'une structure d'une pile selon l'invention est présentée en Figure 2.

Tel qu'illustré à la Figure 2 :
Une pile à combustible constituée d'une anode (5') et d'une cathode (5) est séparée par une membrane (3) à échange de protons, ladite membrane (3) comprenant une couche cathodique (1), côté cathode, et une couche anodique (2) coté anode.

La couche cathodique (1) présente une épaisseur e1, typiquement de 3 à 15 µm, notamment de 5 à 10 µm, de préférence entre 5 et 7 µm. La couche anodique (2) présente une épaisseur e2, typiquement de 5 à 40 µm, notamment de 10 à 30 µm, de préférence entre 10 et 20 µm.

Sur la face externe coté cathode de la membrane (3), la couche cathodique (2) est revêtue d'une couche catalytique cathodique (4).

Sur la face externe coté anode de la membrane (3), la couche anodique (2) est revêtue d'une couche catalytique anodique (4').

Les couches catalytiques cathodique (4) et anodique (4') comprennent des conducteurs protoniques (ionomères) (11) et (21) respectivement, au sein desquels sont répartis des particules catalytiques (12) et (22) respectivement. De façon classique, ces particules catalytiques sont constituées de particules de platine (Pt) sur support carbone.

La couche cathodique (1) comprend notamment des fonctions SH et des fonctions SO₃H. Ces fonctions SH et SO₃H sont également présentes au sein de la couche catalytique cathodique (4), définissant ainsi une zone (1') fonctionnalisée par des fonctions SH, constituée de la couche cathodique (1) et de la couche catalytique cathodique (4).

La couche anodique (2) comprend notamment des fonctions SO₃H qui sont également présentes au sein de la couche catalytique anodique (4').

Selon un autre objet, la présente invention concerne également un procédé de préparation d'une membrane selon l'invention, ledit procédé comprenant :
- La formation de fibres constituant ladite couche cathodique à partir d'une solution comprenant au moins un polymère (i) porteur des fonctions thiol (-SH) et au moins un polymère (iii) porteur de fonctions SO₃H, par électrofilage ;
- La formation de fibres constituant ladite couche anodique à partir d'une solution comprenant au moins un polymère (iii') porteur de fonctions SO₃H, par électrofilage ;
- la mise en forme de la couche anodique et de la couche cathodique, respectivement, à partir des fibres obtenues ;
- l'application de ladite couche cathodique sur ladite couche anodique.

Selon un mode de réalisation, lesdites solutions sont des solutions sol-gel.

Le procédé selon l'invention combine la chimie des sol-gels et la technologie de l'électrofilage, et permet d'obtenir des membranes ayant une conductivité protonique similaire à celle des membranes Nafion^{®}, à haute température, et sous une humidité relative de 90%, avec des propriétés mécaniques anisotropiques.

La morphologie des membranes électrofilées selon l'invention peut être modulée en fonction de la synthèse sol-gel (avec ou sans additifs par exemple), et/ou des paramètres de l'étape d'électrofilage, tels que l'humidité relative, le champ électrique appliqué, la température, la vitesse de rotation de l'électrode....

L'électrofilage (« *electrospinning")* ou filature par voie électrostatique est une méthode de production de fibres qui utilise une force électrique pour tirer des fils de polymères chargés. La technique repose sur l'application d'une tension suffisamment haute à une gouttelette de polymère sous forme liquide (en solution ou en fusion) : le corps du liquide se charge, et la force de répulsion électrostatique s'oppose alors à la tension de surface forçant la gouttelette à s'étirer jusqu'à un point critique (point d'éruption ou « cône de Taylor ») où un flux de liquide jaillit de la surface. Si la cohésion moléculaire du liquide est suffisamment élevée, il n'y a pas de rupture du flux et un jet chargé de liquide est formé. Le jet est alors allongé par un processus causé par la répulsion électrostatique, jusqu'à ce qu'elle soit finalement déposée sur la mise à la terre du collecteur. L'allongement et l'amincissement de la fibre conduit à la formation de fibres « électrofilées », uniformes de diamètres nanométriques.

Le procédé sol-gel consiste en l'élaboration de réseaux d'oxydes via des réactions de polymérisations inorganiques en solution à partir de précurseurs moléculaires, généralement des alcoxydes métalliques. Cette polymérisation se déroule par hydrolyse et condensation. L'étape d'hydrolyse est généralement réalisée avec un catalyseur, qui peut être un acide ou une base. Elle consiste en la réaction entre l'eau et le précurseur pour engendrer des fonctions réactives de type hydroxy, sous forme d'une solution appelée sol. La condensation consiste en la conversion des fonctions hydroxy conduisant à la gélification et à la formation d'un gel dont la viscosité augmente au cours du temps, pour former un réseau macromoléculaire minéral. La phase « gel » dans le procédé sol-gel est définie et caractérisée par un « squelette » solide en 3D inclus dans une phase liquide. La phase solide est typiquement un sol polymérique condensé où les particules se sont enchevêtrées pour former un réseau tridimensionnel.

Selon un mode de réalisation, lesdites solutions sont préparées par mélange du (co)polymère dans un solvant organique, en présence d'un précurseur sol-gel minéral.

Le sol-gel obtenu peut ainsi être qualifié de « sol-gel hybride » dans lequel des molécules organiques ont été ajoutées lors de la synthèse, et sont conservées dans le matériau final.

Typiquement, le précurseur minéral est la silice fonctionnalisée par l'acide sulfonique (SO₃H-SiO₂*)*.

Généralement, la concentration dudit (co)polymère dans la solution est comprise entre 5 et 20 % en poids.

La synthèse sol-gel peut être avantageusement mise en œuvre à température ambiante. Il est classiquement possible d'ajuster la température, le pH, la nature du précurseur et du solvant et les concentrations des réactifs.

La membrane susceptible d'être obtenu par le procédé selon l'invention comprend ainsi un réseau poreux continu 3D aléatoire de fibres de (co)polymére(s) hybride(s) électrofilées,

### Figures

[Fig. 1] La Figure 1 illustre la description du procédé d'électrofilage pour synthétiser les fibres constitutives des membranes selon l'invention.
[Fig. 2] La Figure 2 représente la structure d'une pile à combustible comprenant une membrane selon l'invention.
[Fig. 3] La Figure 3 représente des analyses EDX montrant la répartition de différents éléments dans les fibres: oxygène (a), silicium (b), souffre (c) et fluor (d).
[Fig. 4] La Figure 4 illustre l'évolution de la conductivité protonique en fonction de l'humidité relative et de la présence ou non de fonctions SH auto-régénérantes : pour une membrane électrofilée hybride comprenant les polymères (ii') et (iii'), dans un rapport 1:2 (TEOS:CSPTC (1:2)), ou comprenant les polymères (i), (ii) et (iii'), dans un rapport (ii):(iii):(i) 1:2:1 (TEOS:CSPTC:MPTMS (1:2:1)).
[Fig. 5] La Figure 5 représente l'évolution de la conductivité protonique en fonction de l'humidité relative pour une membrane électrofilée hybride après des tests de dégradation accélérée, et en fonction de la présence ou non de fonctions SH auto-régénérantes : pour une membrane comprenant les polymères (ii') et (iii'), dans un rapport 1:2 (TEOS:CSPTC (1:2)), ou comprenant les polymères (i), (ii) et (iii'), dans un rapport (ii):(iii):(i) 1:2:1 (TEOS:CSPTC:MPTMS (1:2:1)).
[Fig. 6] La Figure 6 représente la photographie des deux surfaces de la membrane bicouche : la photo de gauche représente la face anodique (couche anodique conductrice) et l'image de droite représente la face cathodique (couche cathodique auto-régénérante).
[Fig. 7] La Figure 7 représente les images par microscopie à balayage électronique (SEM) montrant la structure de la couche anodique conductrice (a), la couche cathodique auto-régénérante (b) et la section de la membrane bicouche (c).
[Fig. 8] La Figure 8 illustre la variation de la conductivité en fonction de l'humidité relative pour la couche anodique (a) et la couche cathodique (b).

### Exemples :

### 1. Synthèse et caractérisations

### Solution de la couche cathodique :

Une solution sol-gel a été préparée par dissolution préalable du polymère non-conducteur (PVDF-HFP) dans du diméthylformamide (DMF) (600 mg de PVDF-HFP dans 700 ml de DMF). Puis les additifs (PEO : polyéthylène glycol, et OFP : 2,2,3,3,4,4,5,5-octafluoro-1-pentanol) ont été ajoutés (340 mg de PEO et 60 mg d'OFP). Puis, les précurseurs de silicium (TEOS (tetraethylorthosilicate, 310 mg), CSPTC (2-(4-chlorosulfonylphenyl) ethyltrichlorosilane, 2,04 g, à partir d'une solution à 50% en masse dans le dichlorométhane) et MPTMS ((3-Mercaptopropyl)triméthoxysilane, 310 mg) ont été ajoutés, selon les différents ratios molaires testés, en finissant par le CSPTC qui est le plus réactif. Le murissement de la solution est effectué sous agitation pendant 3 heures à 70°C, afin de pré-hydrolyser les précurseurs de silicium. Une solution homogène V2 est obtenue, contenant les fonctions SH et -SO₃H, et présentant un rapport de TEOS/CSPTC/MPTMS de 1 :2 :1. Des solutions avec les rapports 1 :2 :2 et 1 :1 :1 ont également été préparées selon ce mode opératoire.

### Solution de la couche anodique :

On opère comme ci-dessus, à partir d'un mélange de précurseurs exempt de MPTMS, pour obtenir une solution V1 (contenant les fonctions -SO₃H).

### Electrofilage :

Les fibres ont ensuite été préparées par électrofilage de chacune des solutions V1 et V2 obtenues.

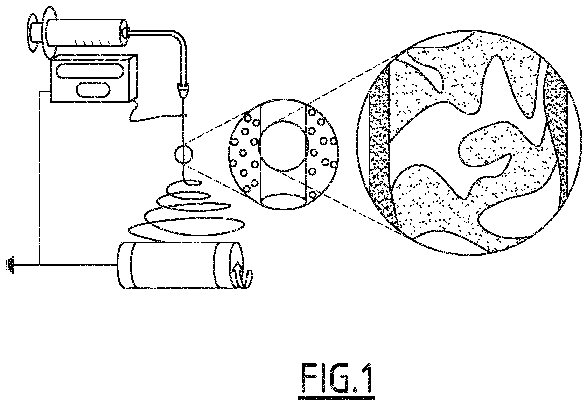

L'installation d'électrofilage utilisée (telle qu'illustrée à la Figure 1) comprenait une seringue et une aiguille (ID = 0,75 mm), une électrode de terre et une unité commerciale de haute tension (ES1a, Electrospinz). L'aiguille était connectée à l'unité de haute tension, qui pouvait générer des tensions de courant continu positives jusqu'à 40 kV.

Deux seringues contenant chacune un volume de la solution V1 ou de la solution V2 sont préparées. Pour obtenir une épaisseur totale de 20 microns, 0,15 mL pour la solution V1 et 0,075 mL pour la solution V2 sont utilisés. Chaque solution V1 et V2 a été électrofilée à 26 kV, à un débit dépendant de l'humidité ambiante. Généralement, l'humidité relative doit être inférieure à 60°C et le débit est d'environ 0.025mL.min⁻¹. L'aiguille d'acier était connectée à une électrode d'unité haute tension, et une feuille d'aluminium reliée à la terre a été placée à 15 cm de distance de l'extrémité de l'aiguille, afin de collecter les différentes couches. Pour élaborer la deuxième couche de la membrane, on substitue la première seringue par la deuxième seringue.

Une membrane blanche et flexible a été obtenue. Enfin, la membrane échangeuse de protons a été séchée pendant vingt-quatre heures à 70°C dans l'air. Après le séchage, les séparateurs EHS ont été soigneusement décollés de la feuille d'aluminium. L'épaisseur de la membrane dépend du volume injecté dans le champ électrique et peut varier entre 15 et 40 microns.

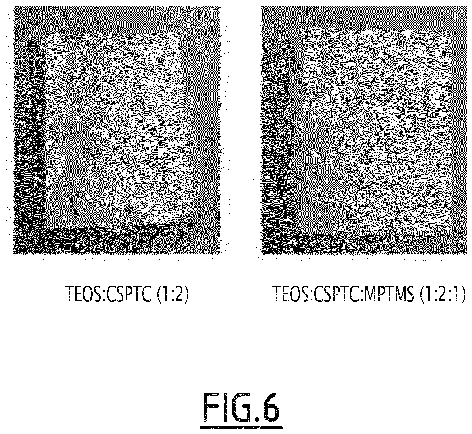

Les deux couches ainsi obtenues sont représentées sur la Figure 6.

### Analyses de la membrane

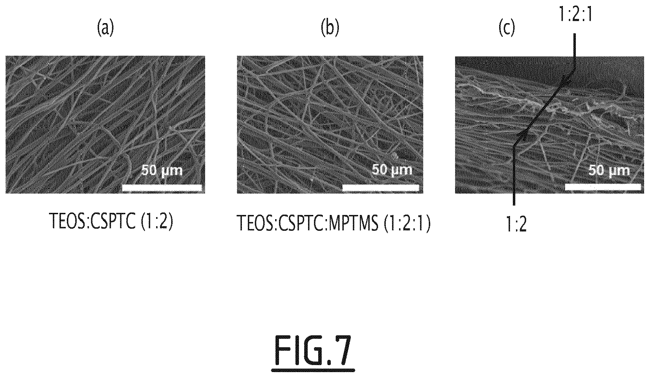

La structure a été investiguée par microscopie à balayage électronique, telle que représentée à la Figure 7.

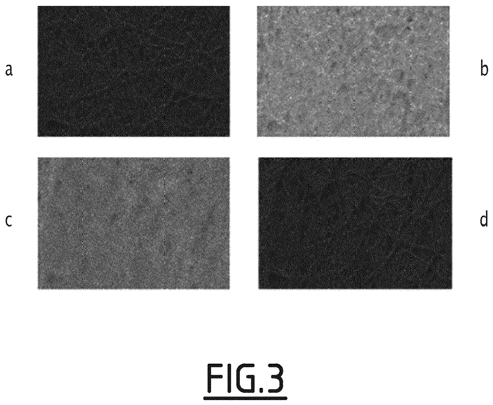

Les images par spectroscopie à balayage électronique de la surface et de la section de la membrane échangeuse de protons électrofilée montrent des fibres entremêlées (D = 200 nm) organisées de façon aléatoire dans l'espace 3D, en délimitant un réseau poreux continu de 85,4%. L'épaisseur de la membrane a été mesurée à environ 20 µm. Les analyses EDX des fibres (Figure 3) illustrent une répartition homogène en surface des éléments O, F, S et Si, ne relevant aucune séparation de phase au niveau micrométrique.

### 2. Propriétés

Le calcul de la rétention d'eau démontre que la couche cathodique TEOS :CSPTC :MPTMS (1 :2 :1) est beaucoup moins hydrophile que la couche anodique correspondante TEOS :CSPTC (1 :2) (69.6 % d'eau vs. 141.9 % d'eau).

Les propriétés auto-régénérantes des membranes comprenant une couche cathodique présentant des fonctions -SH ont été analysées.

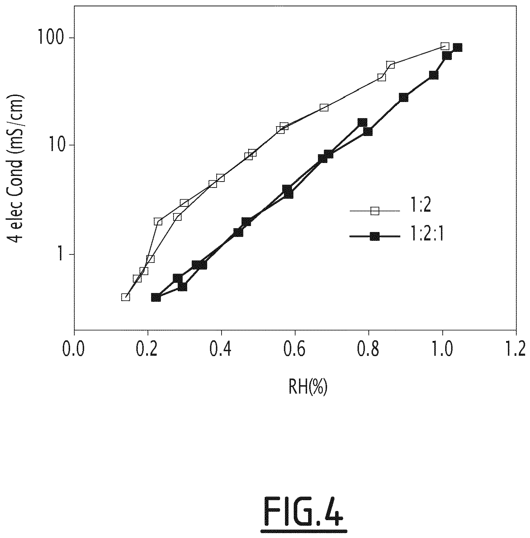

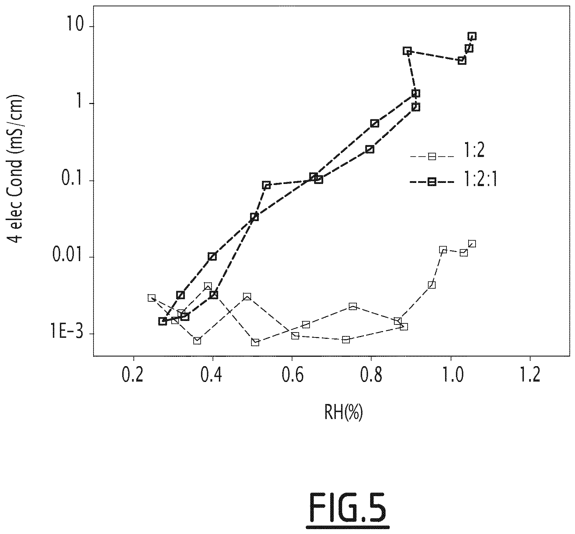

Tel qu'illustrée à la Figure 4, l'évolution de la conductivité protonique en fonction de l'humidité montre que l'ajout de fonctions réactives auto-régénérantes impacte faiblement les valeurs de conductivité pour une membrane classique. Néanmoins, cette membrane qui comprend des fonctions -SH présente une meilleure résistance à l'oxydation, et notamment en présence de H₂O₂, tel que cela est illustré à la Figure 5 qui démontre une rétention de conductivité après un test de dégradation accélérée.

L'impact du ratio des fonctions -SO3H/SH sur les propriétés physicochimiques des membranes a été étudié pour différentes compositions :
Pour la couche anodique, les ratios TEOS :CSPTC suivants ont été testés :
   1 :2 , 1 :3, 1 :1, et 2 :1
Pour la couche cathodique, les ratios TEOS :CSPTC :MPTMS suivants ont été testés :
   1 :2 :1 , 1 :2 :2 et 1 :1 :1.

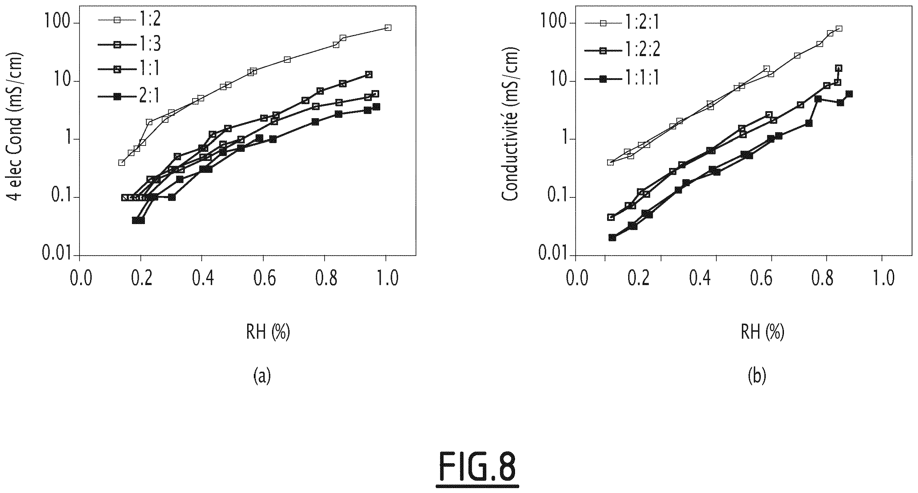

L'impact sur la conductivité est illustré en Figure 8 qui représente la variation de conductivité en fonction du taux d'humidité pour différentes compositions de membrane hybride. La figure de gauche représente la variation de conductivité en fonction du rapport TEOS/CSPTC et la figure de droite représente la variation de conductivité en fonction de la quantité de TEOS/CPSPTC/MPTMS. Ces expériences montrent que ce sont les valeurs de TEOS :CSPTC de 1 :2 et TEOS :CSPTC :MPTMS 1 :2 :1 qui donnent les meilleurs résultats en terme de conductivité, à 80°C.

## Revendications

1. Membrane auto-régénérante
à échange de protons pour pile à combustible, ladite membrane comprenant une face anodique coté anode et une face cathodique coté cathode, ladite membrane comprenant deux couches :
Une couche cathodique, conductrice et auto-régénérante, assurant la face cathodique, et comprenant au moins un polymère (iii) porteur de fonctions SO₃H; et
Une couche anodique, conductrice, assurant la face anodique et comprenant au moins un polymère (iii') porteur de fonctions SO₃H;
Lesdits polymères (iii) et (iii') pouvant être identiques ou différents ;
Ladite membrane étant **caractérisée en ce que** ladite couche cathodique contient au moins un polymère (i) portant des fonctions thiol (-SH).

2. Membrane selon la revendication 1, telle que ladite couche cathodique et/ou ladite couche anodique comprend/comprennent, en outre, un polymère inorganique (ii) et/ou (ii'), respectivement ; lesdits polymères (ii) et (ii') pouvant être identiques ou différents.

3. Membrane selon l'une quelconque des revendications précédentes, telle que le polymère (i) portant des fonctions SH est le (3-mercaptopropyl)trimethoxysilane (MPTMS).

4. Membrane selon l'une quelconque des revendications précédentes, telle que le polymère (ii) et /ou (ii') est le TEOS (tétraéthylorthosilicate) ou le TMOS (tétraméthylorthosilicate).

5. Membrane selon l'une quelconque des revendications précédentes, telle que le polymère (iii) et /ou (iii') est CSPTC (2-(4-Chlorosulfonylphényl)éthyltrichlorosilane).

6. Membrane selon l'une quelconque des revendications précédentes, telle que au sein de ladite couche cathodique, le rapport de la concentration en fonctions SO₃H, rapportée à la concentration en fonctions SH est compris entre 0.5 et 4, de préférence entre 1 et 4.

7. Membrane selon l'une quelconque des revendications précédentes telle que ladite couche cathodique a une épaisseur comprise entre 3 et 15 µm, notamment entre 5 et 10 µm, et préférentiellement entre 5 et 7 µm.

8. Membrane selon l'une quelconque des revendications précédentes telle que ladite couche cathodique présente un gradient croissant de concentration en fonction SH, depuis sa face interne avec ladite couche anodique vers sa face externe assurant l'interface avec une couche catalytique cathodique.

9. Membrane selon l'une quelconque des revendications précédentes, telle que :
dans la couche cathodique, les polymères (ii), (iii) et (i) sont dans le rapport 1 :2 :1, et
dans la couche anodique les polymères (ii') et (iii') sont dans le rapport 1 :2.

10. Pile à combustible comprenant une membrane bicouche selon l'une quelconque des revendications précédentes telle que la membrane bicouche est revêtue d'une couche catalytique cathodique sur la face externe de la couche cathodique et d'une couche catalytique anodique sur la face externe de la couche anodique.

11. Pile selon la revendication 10 telle que la couche catalytique cathodique comprend les polymères (i) et (iii), et la couche catalytique anodique comprend le polymère (iii').

12. Procédé de préparation d'une membrane selon l'une quelconque des revendications 1 à 8 comprenant :
- La formation de fibres constituant ladite couche cathodique à partir d'une solution comprenant au moins un polymère (i) porteur des fonctions thiol (-SH) et au moins un polymère (iii) porteur de fonctions SO₃H, par électrofilage ;
- La formation de fibres constituant ladite couche anodique à partir d'une solution comprenant au moins un polymère (iii') porteur de fonctions SO₃H, par électrofilage ;
- la mise en forme de la couche anodique et de la couche cathodique, respectivement, à partir des fibres obtenues ;
- l'application de ladite couche cathodique sur ladite couche anodique.

## Patentansprüche

1. Selbstregenerierende Protonenaustauschmembran für Brennstoffzelle, die Membran umfassend eine anodenseitige Anodenseite und eine kathodenseitige Kathodenseite, die Membran umfassend zwei Schichten:
eine leitende und selbstregenerierende Kathodenschicht, die die Kathodenseite gewährleistet und umfassend mindestens ein Polymer (iii), das SO₃H-Funktionen trägt; und
eine leitende Anodenschicht, die die Anodenseite gewährleistet und umfassend mindestens ein Polymer (iii') umfasst, das SO₃H-Funktionen trägt;
wobei die Polymere (iii) und (iii') gleich oder verschieden sein können;
wobei die **dadurch gekennzeichnet ist, dass** die Kathodenschicht mindestens ein Polymer (i) enthält, das Thiolfunktionen (-SH) trägt.

2. Membran nach Anspruch 1, wobei die Kathodenschicht und/oder die Anodenschicht ferner ein anorganisches Polymer (ii) bzw. (ii') umfasst/umfassen; wobei die Polymere (ii) und (ii') gleich oder verschieden sein können.

3. Membran nach einem der vorherigen Ansprüche, wobei das Polymer (i), das SH-Funktionen trägt, (3-Mercaptopropyl)trimethoxysilan (MPTMS) ist.

4. Membran nach einem der vorherigen Ansprüche, wobei das Polymer (ii) und/oder (ii') TEOS (Tetraethylorthosilikat) oder TMOS (Tetramethylorthosilikat) ist.

5. Membran nach einem der vorherigen Ansprüche, wobei das Polymer (iii) und/oder (iii') CSPTC (2-(4-Chlorsulfonylphenyl)ethyltrichlorsilan) ist.

6. Membran nach einem der vorherigen Ansprüche, wobei innerhalb der Kathodenschicht das Verhältnis der Konzentration an SOsH-Funktionen, bezogen auf die Konzentration an SH-Funktionen, zwischen 0,5 und 4, vorzugsweise zwischen 1 und 4, liegt.

7. Membran nach einem der vorherigen Ansprüche, wobei die Kathodenschicht eine Stärke aufweist, die zwischen 3 und 15 µm, insbesondere zwischen 5 und 10 µm und vorzugsweise zwischen 5 und 7 µm liegt.

8. Membran nach einem der vorherigen Ansprüche, wobei die Kathodenschicht einen zunehmenden Konzentrationsgradienten abhängig von SH aufweist, von ihrer Innenseite mit der Anodenschicht zu ihrer Außenseite, die die Grenzfläche mit einer Kathodenkatalysatorschicht gewährleistet.

9. Membran nach einem der vorherigen Ansprüche, wobei:
in der Kathodenschicht die Polymere (ii), (iii) und (i) in dem Verhältnis 1:2:1 sind, und in der Anodenschicht die Polymere (ii') und (iii') in dem Verhältnis 1:2 sind.

10. Brennstoffzelle, umfassend eine zweischichtige Membran nach einem der vorherigen Ansprüche, wobei die zweischichtige Membran auf der Außenseite der Kathodenschicht mit einer kathodischen Katalysatorschicht und auf der Außenseite der Anodenschicht mit einer anodischen Katalysatorschicht beschichtet ist.

11. Zelle nach Anspruch 10, wobei die kathodische Katalysatorschicht die Polymere (i) und (iii) umfasst und die anodische Katalysatorschicht das Polymer (iii') umfasst.

12. Verfahren zur Herstellung einer Membran nach einem der Ansprüche 1 bis 8, umfassend:
- Ausbilden von Fasern, die die Kathodenschicht bilden, aus einer Lösung, die mindestens ein Polymer (i), das Thiolfunktionen (-SH) trägt, und mindestens ein Polymer (iii), das SO₃H-Funktionen trägt, umfasst, durch Elektrospinnen;
- Ausbilden von Fasern, die die Anodenschicht darstellen, aus einer Lösung, umfassend mindestens ein Polymer (iii'), das SO₃H-Funktionen trägt, durch Elektrospinnen;
- Bilden der Anodenschicht bzw. der Kathodenschicht aus den erlangten Fasern;
- Aufbringen der Kathodenschicht auf die Anodenschicht.

## Claims

1. A self-regenerating proton exchange membrane for fuel cell, said membrane comprising an anode surface on the anode side and a cathode surface on the cathode side, said membrane comprising two layers:
A conducting and self-regenerating cathodic layer, ensuring the cathode surface and comprising at least one polymer (iii) carrying SO₃H functions; and
A conducting anodic layer ensuring the anode surface and comprising at least one polymer (iii') carrying SO₃H functions;
Said polymers (iii) and (iii') possibly being the same or different.
Said membrane being **characterized in that** said cathodic layer contains at least one polymer (i) carrying thiol (-SH) functions.

2. The membrane according to claim 1, such that said cathodic layer and/or said anodic layer further comprise(s) an inorganic polymer (ii) and/or (ii') respectively; said polymers (ii) and (ii') possibly being the same or different.

3. The membrane according to any of the preceding claims, such that polymer (i) carrying SH functions is (3-mercaptopropyl)trimethoxysilane (MPTMS).

4. The membrane according to any of the preceding claims, such that the polymer (ii) and/or (ii') is TEOS (tetraethyl orthosilicate) or TMOS (tetramethyl orthosilicate).

5. The membrane according to any of the preceding claims, such that the polymer (iii) and/or (iii') is CSPTC (2-(4-Chlorosulfonylphenyl)ethyltrichlorosilane).

6. The membrane according to any of the preceding claims, such that within said cathodic layer the ratio of the concentration of SO₃H functions to the concentration of SH functions is between 0.5 and 4, preferably between 1 and 4.

7. The membrane according to any of the preceding claims, such that said cathodic layer has a thickness of between 3 and 15 µm, in particular between 5 and 10 µm, and preferably between 5 and 7 µm.

8. The membrane according to any of the preceding claims, such that said cathodic layer has an increasing concentration gradient of SH functions, from its inner surface with said anodic layer to its outer surface ensuring the interface with a catalytic cathodic layer.

9. The membrane according to any of the preceding claims such that:
in the cathodic layer, the polymers (ii), (iii) and (i) are in a ratio of 1:2:1; and
in the anodic layer the polymers (ii') and (iii') are in a ratio of 1:2.

10. A fuel cell comprising a bilayer membrane according to any of the preceding claims, such that the bilayer membrane is coated with a catalytic cathodic layer on the outer surface of the cathodic layer, and with a catalytic anodic layer on the outer surface of the anodic layer.

11. The cell according to claim 10, such that the catalytic cathodic layer comprises the polymers (i) and (iii), and the catalytic anodic layer comprises polymer (iii').

12. A method for preparing a membrane according to any of claims 1 to 8, comprising:
- The formation of fibres composing said cathodic layer, from a solution comprising at least one polymer (i) carrying thiol (-SH) functions and at least one polymer (iii) carrying SO₃H functions, via electrospinning;
- The formation of fibres composing said anodic layer, from a solution comprising at least one polymer (iii') carrying SO₃H functions, via electrospinning;
- Forming the anodic layer and the cathodic layer respectively from the fibres obtained;
- Applying said cathodic layer onto said anodic layer.
